# EUROPEAN PATENT SPECIFICATION

(11) **EP 4 599 179 B1**
(45) Date of publication and mention of the grant of the patent: **25.02.2026**
(21) Application number: 23786761.9
(22) Date of filing: 04.10.2023
(51) Int. Cl.: F16L 33/207

(54) **FITTING FOR THE CONNECTION OF TWO TUBULAR ELEMENTS AND METHOD FOR THE PRODUCTION THEREOF**
FITTING ZUM VERBINDEN ZWEIER ROHRFÖRMIGER ELEMENTE UND VERFAHREN ZU DESSEN HERSTELLUNG
RACCORD POUR LE RACCORDEMENT DE DEUX ÉLÉMENTS TUBULAIRES ET SON PROCÉDÉ DE PRODUCTION

(30) Priority: 05.10.2022 IT 202200020499
(43) Date of publication of application: 13.08.2025
(73) Proprietor: I.M.M. Hydraulics S.p.A., 66041 Atessa (CH) (IT)
(72) Inventor: VIZZARRI, Domenico, 66041 ATESSA (CH) (IT)
(74) Representative: Studio Torta S.p.A.
(86) International application number: PCT/IB2023/059963
(87) International publication number: WO 2024/075038

(56) References cited:
- EP-A1- 0 255 393
- WO-A1-2010/146539
- DE-A1- 3 630 703
- DE-C2- 3 490 644

## Description

### Cross-Reference to Related Applications

This Patent Application claims priority from Italian Patent Application No. 102022000020499 filed on October 5, 2022.

### Technical Field

This invention relates to a fitting for the connection of two tubular elements.

### Background

In particular, this invention relates to a fitting for the connection of two tubular elements of the type comprising an inner sleeve, which has a longitudinal axis, and is delimited, axially, by a first end face and a second end face that are opposite to each other.

The inner sleeve comprises a first portion, which extends starting from the first end face, and is designed to receive and hold a first tubular element, and a second portion, which extends starting from the second end face, and is provided, normally, with an outer coupling flange.

Generally, the first portion of the inner sleeve is delimited by an outer side surface with a conical shape provided with multiple annular teeth, which extend around the above-mentioned longitudinal axis, and are distributed along the longitudinal axis.

The fitting further comprises a locking nut, in particular a hexagonal one, which is designed to receive and hold a second tubular element, and is provided with an inner hooking flange.

The locking nut is fitted around the inner sleeve starting from the first end face, is moved forward along the inner sleeve so as to move the hooking flange substantially in contact with the coupling flange, and is axially locked on the inner sleeve using a locking ring.

The known fittings, e.g. from WO 2010/146539 A1, for the connection of two tubular elements of the type described above have some drawbacks, mainly deriving from the fact that the presence of the inner sleeve, the locking nut, and the locking ring entails a relatively large number of components.

### Summary

The object of this invention is to provide a fitting for the connection of two tubular elements that is free of the drawbacks described above and is simple and economical to manufacture.

According to this invention, a fitting for the connection of two tubular elements is provided as claimed in claims 1 to 3.

This invention further relates to a method for the manufacture of a fitting for the connection of two tubular elements.

According to this invention, a method for the manufacture of a fitting for the connection of two tubular elements is provided as claimed in claims 4 to 8.

### Brief Description of the Drawings

This invention will now be described with reference to the attached drawings, which illustrate a non-limiting embodiment thereof, in which:
Figure 1 is a schematic side view, with parts in cross-section, of a preferred embodiment of the fitting of this invention;
Figure 2 is a schematic side view, with parts in cross-section, of two tubular elements connected together using the fitting in Figure 1; and
Figure 3 schematically illustrates the method for manufacturing the fitting in Figure 1.

### Description of Embodiments

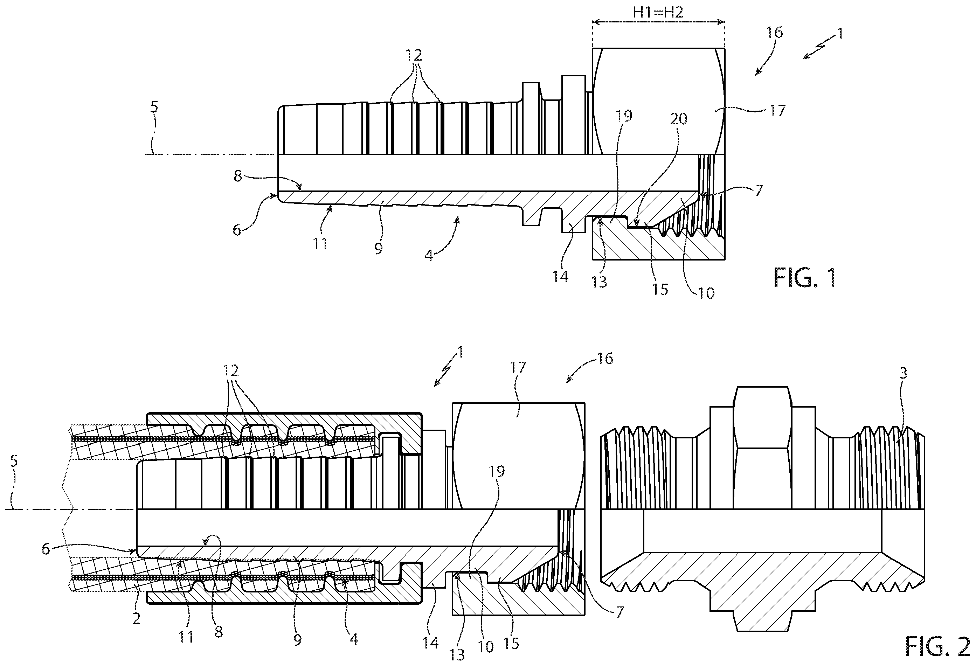

With reference to Figures 1 and 2, reference number 1 indicates, as a whole, a fitting for connecting two tubular elements 2, 3 together.

The fitting 1 comprises an inner sleeve 4, which has a longitudinal axis 5, and is delimited axially by two end faces 6, 7 substantially perpendicular to the axis 5.

The sleeve 4 is delimited by an inner surface 8 with a cylindrical shape that is coaxial to the axis 5, and comprises a first portion 9, which extends starting from the face 6, and is designed to receive and hold a first tubular element 2, and a second portion 10, extending starting from the face 7.

The surface 8 is smooth and has no cavities, in particular annular, and ensures the sleeve 4 has a relatively high resistance.

The portion 9 is delimited by an outer surface 11, which has a conical shape, and is provided with a plurality of annular teeth 12, which extend around the axis 5, and are distributed along the axis 5.

The portion 10 is delimited by an outer surface 13 that is coaxial to the axis 5, and is provided with a first coupling flange 14, which radially projects outside from the surface 13, and consists of a single piece with the sleeve 4.

The portion 10 is further provided with a second coupling flange 15, which is formed between the face 7 and the first flange 14, radially projects outside from the surface 13, and consists of a single piece with the sleeve 4.

The fitting 1 comprises a locking nut 16, which has a hexagonal shape, is designed to receive, and hold a second tubular element 3, and is delimited by a plurality of outer locking faces 17, in this case six faces 17.

According to some variants not shown, the nut 16 has a number of faces 17 other than six, for example from four to eight.

The faces 17 have a height H1, measured parallel to a longitudinal axis 18 of the nut 16, equal to a height H2 of the nut 16, which is also measured parallel to the axis 18.

The nut 16 is provided with an inner hooking flange 19, which radially projects inside from an inner surface 20 of the nut 16, consists of a single piece with the nut 16, and is made at one end of the nut 16.

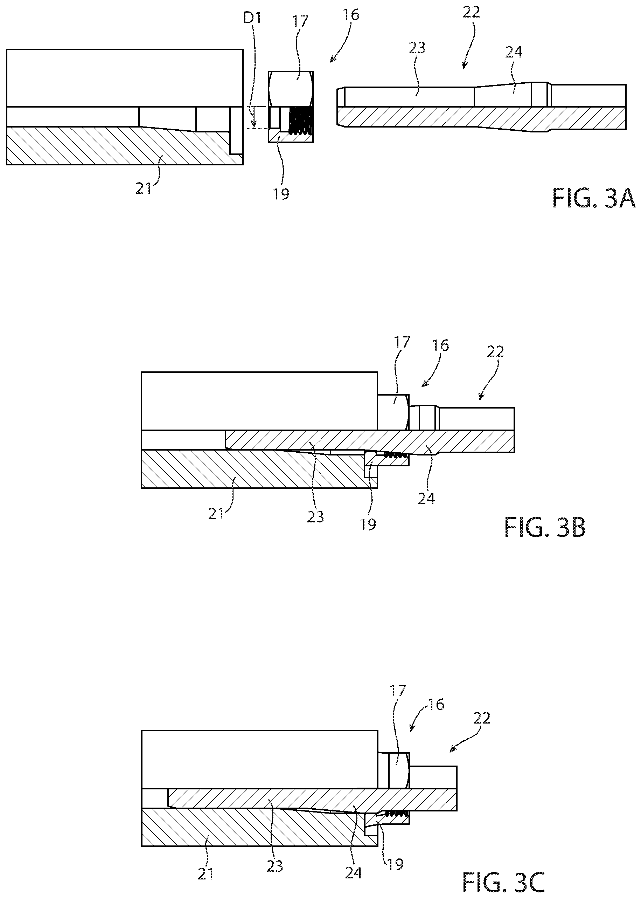

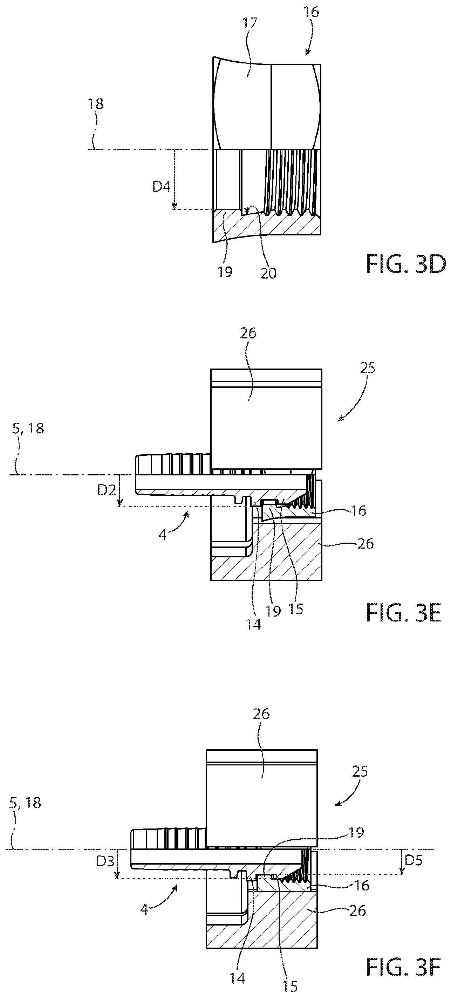

According to what is shown in Figure 3, the flange 19 has an initial inner diameter D1 (Figure 3a) that is smaller than an outer diameter D2 of the flange 14 (Figure 3e) and an outer diameter D3 of the flange 15 (Figure 3f).

The nut 16 is axially locked in a matrix 21, and the flange 19 is widened using the insertion of a punch 22 in the nut 16 and in the matrix 21 (Figures 3a, 3b, and 3c).

With regard to the above description, it should be noted that the punch 22 comprises a guide portion 23 having a diameter approximating, rounding down, the inner diameter D1, and a widening portion 24, which has a truncated cone shape, and is designed to engage the flange 19 and to widen it to an intermediate inner diameter D4 (Figure 3d) that is greater than the outer diameter D3 of the flange 15.

At this point, the nut 16 is inserted on the sleeve 4 starting from the face 7 and is moved along the sleeve 4 so as to arrange the flange 19 between the two flanges 14, 15 (Figure 3e).

Finally, the nut 16 is deformed at least at the flange 19 using a pressing device 25 comprising at least two pressing elements 26, which are uniformly distributed around the axis 18, and are mobile transversely to the axis 18 to compress the nut 16 and deform the flange 19 to a final inner diameter D5 that is smaller than the outer diameters D2, D3 of the flange 14, 15 (Figures 3e and 3f).

As a result, the nut 16 is axially locked along the sleeve 4 by the engagement of the flange 19 between the flanges 14, 15 and the fitting 1 has a relatively small number of components.

According to a variant not forming part of the claimed invention, the nut 16 is, in the first place, manufactured, for example via moulding, so as to have, in an initial configuration, the intermediate inner diameter D4, and is, thus, deformed by the pressing device 25 so as to have, in a final configuration, the final inner diameter D5.

## Claims

1. A method for the manufacture of a fitting for the connection of two tubular elements (2, 3), the fitting comprising an inner sleeve (4), which has a longitudinal axis (5), is axially delimited by two end faces (6, 7) and comprises, in turn, a first portion (9), which extends starting from a first end face (6) and is designed to receive and hold a first tubular element (2), and a second portion (10), which extends starting from a second end face (7) and is provided with a first outer coupling flange (14) manufactured as one single piece with the inner sleeve (4); and a locking nut (16), in particular a hexagonal one, which is designed to receive and hold a second tubular element (3) and is provided with an inner hooking flange (19); the method comprising the steps of:
obtaining, on the inner sleeve (4), a second outer coupling flange (15), which is arranged between the first coupling flange (14) and the second end face (7) and is manufactured as one single piece with the inner sleeve (4);
manufacturing the locking nut (16) so that the hooking flange (19) has, in an initial configuration, an inner diameter (D4) that is greater than an outer diameter (D3) of the second coupling flange (15);
inserting the locking nut (16) along the inner sleeve (4) starting from the second end face (7) so as to place the hooking flange (19) between the two coupling flanges (14, 15); and
deforming the locking nut (16) so that the hooking flange (19) has, in a final configuration, an inner diameter (D5) that is smaller than the outer diameter (D2, D3) of the two coupling flanges (14, 15) so as to allow the hooking flange (19) to be axially locked between the coupling flanges (14, 15);
and being **characterized in that**:
the initial configuration of the locking nut (16) is obtained by widening the hooking flange (19) from a first inner diameter (D1), which is smaller than the outer diameter (D2, D3) of the two coupling flanges (14, 15), to a second inner diameter (D4), which is greater than the outer diameter (D3) of the second coupling flange (15); and
the locking nut (16) is delimited by a plurality of outer locking faces (17), which have a height (H1), measured parallel to the longitudinal axis (5) of the inner sleeve (4), equal to a height (H2) of the locking nut (16), also measured parallel to the longitudinal axis (5) of the inner sleeve (4).

2. The method according to claim 1, wherein the hooking flange (19) is widened by inserting a punch (22) into the locking nut (16).

3. The method according to claim 1 or 2, wherein the final configuration of the locking nut (16) is obtained by means of a pressing device (25) mounted on the outside of the locking nut (16) and comprising at least two pressing elements (26), which are movable crosswise to a longitudinal axis (18) of the locking nut (16) in order to deform the hooking flange (19).

4. The method according to any one of the preceding claims, wherein the inner sleeve (4) is delimited by an inner cylindrical surface (8), which is smooth and has no cavities.

## Patentansprüche

1. Verfahren zur Herstellung eines Fittings für die Verbindung von zwei rohrförmigen Elementen (2, 3), wobei das Fitting eine Innenhülse (4) umfasst, die eine Längsachse (5) aufweist, axial durch zwei Stirnflächen (6, 7) begrenzt ist und ihrerseits einen ersten Abschnitt (9), der sich von einer ersten Stirnfläche (6) aus erstreckt und dazu ausgelegt ist, ein erstes rohrförmiges Element (2) aufzunehmen und zu halten, und einen zweiten Abschnitt (10) umfasst, der sich von einer zweiten Stirnfläche (7) aus erstreckt und mit einem ersten äußeren Kupplungsflansch (14) versehen ist, der einstückig mit der Innenhülse (4) hergestellt ist; und eine Sicherungsmutter (16), insbesondere eine sechseckige, die dazu ausgelegt ist, ein zweites rohrförmiges Element (3) aufzunehmen und zu halten und mit einem inneren Einhakflansch (19) versehen ist; wobei das Verfahren die folgenden Schritte umfasst:
Erhalten, an der Innenhülse (4), eines zweiten äußeren Kopplungsflansches (15), der zwischen dem ersten Kopplungsflansch (14) und der zweiten Stirnfläche (7) angeordnet ist und einstückig mit der Innenhülse (4) hergestellt ist;
Herstellen der Sicherungsmutter (16) derart, dass der Einhakflansch (19) in einer Anfangskonfiguration einen Innendurchmesser (D4) aufweist, der größer ist als ein Außendurchmesser (D3) des zweiten Kopplungsflansches (15);
Einführen der Sicherungsmutter (16) entlang der Innenhülse (4) beginnend von der zweiten Stirnfläche (7), um den Einhakflansch (19) zwischen den beiden Kopplungsflanschen (14, 15) zu platzieren; und
Verformen der Sicherungsmutter (16), so dass der Einhakflansch (19) in einer Endkonfiguration einen Innendurchmesser (D5) aufweist, der kleiner ist als der Außendurchmesser (D2, D3) der beiden Kopplungsflansche (14, 15), um zu ermöglichen, dass der Einhakflansch (19) axial zwischen den Kopplungsflanschen (14, 15) gesperrt wird;
und **dadurch gekennzeichnet, dass:**
die anfängliche Konfiguration der Sicherungsmutter (16) durch Aufweiten des Einhakflansches (19) von einem ersten Innendurchmesser (D1), der kleiner ist als der Außendurchmesser (D2, D3) der beiden Kopplungsflansche (14, 15), auf einen zweiten Innendurchmesser (D4), der größer ist als der Außendurchmesser (D3) des zweiten Kopplungsflansches (15), erhalten wird; und
die Sicherungsmutter (16) von einer Vielzahl von äußeren Sicherungsflächen (17) begrenzt ist, die eine Höhe (H1) aufweisen, gemessen parallel zur Längsachse (5) der Innenhülse (4), die gleich einer Höhe (H2) der Sicherungsmutter (16) ist, ebenfalls gemessen parallel zur Längsachse (5) der Innenhülse (4).

2. Verfahren nach Anspruch 1, wobei der Einhakflansch (19) durch Einführen eines Stempels (22) in die Sicherungsmutter (16) aufgeweitet wird.

3. Verfahren nach Anspruch 1 oder 2, wobei die endgültige Konfiguration der Sicherungsmutter (16) mittels einer Pressvorrichtung (25) erhalten wird, die an der Außenseite der Sicherungsmutter (16) angebracht ist und mindestens zwei Presselemente (26) umfasst, die quer zu einer Längsachse (18) der Sicherungsmutter (16) beweglich sind, um den Einhakflansch (19) zu verformen.

4. Verfahren nach einem der vorhergehenden Ansprüche, wobei die Innenhülse (4) durch eine innere zylindrische Oberfläche (8) begrenzt ist, die glatt ist und keine Hohlräume aufweist.

## Revendications

1. Procédé de fabrication d'un raccord pour la liaison de deux éléments tubulaires (2, 3), le raccord comprenant un manchon intérieur (4), qui a un axe longitudinal (5), est délimité axialement par deux faces d'extrémité (6, 7) et comprend, à son tour, une première partie (9), qui s'étend à partir d'une première face d'extrémité (6) et qui est conçue pour recevoir et maintenir un premier élément tubulaire (2), et une seconde partie (10) qui s'étend à partir d'une seconde face d'extrémité (7) et qui est pourvue d'une première bride d'accouplement extérieure (14) fabriquée en une seule pièce avec le manchon intérieur (4) ; et un écrou de verrouillage (16), en particulier hexagonal, qui est conçu pour recevoir et maintenir un second élément tubulaire (3) et pourvu d'une bride d'accrochage intérieure (19) ; le procédé comprenant les étapes consistant à :
obtenir, sur le manchon intérieur (4), une seconde bride d'accouplement extérieure (15), qui est disposée entre la première bride d'accouplement (14) et la seconde face d'extrémité (7) et est fabriquée en une seule pièce avec le manchon intérieur (4) ;
fabriquer l'écrou de verrouillage (16) de sorte que la bride d'accrochage (19) présente, dans une configuration initiale, un diamètre intérieur (D4) supérieur au diamètre extérieur (D3) de la seconde bride d'accouplement (15) ;
insérer l'écrou de verrouillage (16) le long du manchon intérieur (4) en commençant par la seconde face d'extrémité (7) de manière à placer la bride d'accrochage (19) entre les deux brides d'accouplement (14, 15) ; et
déformer l'écrou de verrouillage (16) de sorte que la bride d'accrochage (19) présente, dans une configuration finale, un diamètre intérieur (D5) inférieur au diamètre extérieur (D2, D3) des deux brides d'accouplement (14, 15), afin de permettre le verrouillage axial de la bride d'accrochage (19) entre les brides d'accouplement (14, 15) ;
et étant **caractérisé en ce que** :
la configuration initiale de l'écrou de verrouillage (16) est obtenue en élargissant la bride d'accrochage (19) d'un premier diamètre intérieur (D1), qui est inférieur au diamètre extérieur (D2, D3) des deux brides d'accouplement (14, 15), à un second diamètre intérieur (D4), qui est supérieur au diamètre extérieur (D3) de la seconde bride d'accouplement (15) ; et
l'écrou de verrouillage (16) est délimité par plusieurs faces de verrouillage extérieures (17), qui ont une hauteur (H1), mesurée parallèlement à l'axe longitudinal (5) du manchon intérieur (4), égale à une hauteur (H2) de l'écrou de verrouillage (16), également mesurée parallèlement à l'axe longitudinal (5) du manchon intérieur (4).

2. Procédé selon la revendication 1, dans lequel la bride d'accrochage (19) est élargie par l'insertion d'un poinçon (22) dans l'écrou de verrouillage (16).

3. Procédé selon la revendication 1 ou 2, dans lequel la configuration finale de l'écrou de verrouillage (16) est obtenue au moyen d'un dispositif de pression (25) monté à l'extérieur de l'écrou de verrouillage (16) et comprenant au moins deux éléments de pression (26), qui sont mobiles transversalement par rapport à un axe longitudinal (18) de l'écrou de verrouillage (16) afin de déformer la bride d'accrochage (19).

4. Procédé selon l'une quelconque des revendications précédentes, dans lequel le manchon intérieur (4) est délimité par une surface cylindrique intérieure (8), qui est lisse et ne présente pas de cavités.
